# EUROPEAN PATENT SPECIFICATION

(11) **EP 1 462 040 B1**
(45) Date of publication and mention of the grant of the patent: **05.09.2007**
(21) Application number: 04075948.2
(22) Date of filing: 26.03.2004
(51) Int. Cl.: A47J 31/36, A47J 31/46, A47J 27/21

(54) **Installation for the preparation of hot water**
Vorrichtung zur Zubereitung von warmem Wasser
Installation pour la préparation d'eau chaude

(30) Priority: 26.03.2003 NL 1023023
(43) Date of publication of application: 29.09.2004
(73) Proprietor: Bravilor Holding B.V., 1704 RD Heerhugowaard (NL)
(72) Inventor: Roet, Frank Petrus Nicolaas, 1713 HE Opdam (NL); Verhoeven, Romanus Eduard, 1703 RK Heerhugowaard (NL); Van Steenderen - De Kok, Johannes Jacobus, 1705 ED Heerhugowaard (NL)
(74) Representative: van Westenbrugge, Andries

(56) References cited:
- EP-A- 0 232 460
- EP-A- 0 771 542
- CH-A- 689 607
- US-A- 1 498 648
- US-A- 3 737 076
- US-A- 5 918 768

## Description

### Field of the invention

The invention relates to an installation for the preparation of hot water, according to the preamble of Claim 1.

### State of the art

Such an installation is known from European patent publication EP 0 232 460 A, in which the vent pipe is connected to the hot water pipe. Furthermore, such an installation is known from Swiss patent publication CH 689 607 A, in which the vent pipe has the form of a vent valve, which again is connected to the hot water pipe. An installation of this type is also described in EP 0 771 542. In this installation the pump is installed in the cold water pipe between the cold water reservoir and the heating unit. However, the invention yet to be described is not restricted to this and also covers installations where the pump has been installed in the hot water pipe between the heating unit and the draw-off point.

One problem that arises in such an installation is the occurrence of vapour bubbles and air bubbles in the various components of the installation. These bubbles can disturb the flow of water through the installation and thus, for example, have a severe adverse effect on the functioning of measurement systems that function on the basis of an undisturbed uniform flow of water. In general, the operation of the pump will also be influenced by vapour bubbles or air bubbles in the water. The pump will consequently no longer deliver a uniform stream of water, as a result of which the measurability of the pumping process is adversely affected.

The vapour bubbles and air bubbles can get into the water in various ways.

The heating unit constitutes a first source of vapour bubbles. In a number of cases what is concerned here is flow-through heating, where the cold water is fed through a reservoir which has a feed connection and a discharge connection, an (in general electric) heating element being arranged in the reservoir. The water in the reservoir is kept close to boiling point by the thermostat-controlled heating element. Certainly in the vicinity of the element, boiling phenomena will arise and air bubbles and vapour bubbles will be formed.

In other cases what is concerned is a heat exchanger with a reservoir which contains hot water that is kept at a desired temperature by means of a thermostat-controlled heating element. A, for example spirally wound, pipe through which the cold water is fed also runs through this reservoir. If the sizing is chosen correctly, cold water flowing in at the inlet connection will be heated in the heat exchanger to a high temperature that can approach the boiling point. As a result of the incipient boiling process, air and vapour bubbles will be able to develop, certainly close to the outlet connection, which bubbles are entrained by the flowing water or cling to a pipe wall and impede the flow at this location.

The pump constitutes a second source of air bubbles. In general, a certain amount of gas will be dissolved in the water. As a result of the turbulent movements of the water in the pump some of these gases can be liberated and form air bubbles, as a result of which the operation of the pump is impaired. These air bubbles as well will be entrained by the flowing water. If the flow ceases, air and vapour bubbles present in the pipes can deposit on the wall of the pipe and thus disturb a further flow of water.

The cold water reservoir is another source of air bubbles. Fresh water from a supply line is introduced into this reservoir in order to keep the water in the reservoir at a desired level. This introduction of fresh water frequently gives rise to turbulence, as a result of which air can be entrapped in the water, which then can lead to the problems indicated above in other parts of the installation.

The aim of the invention is, now, to avoid the abovementioned disadvantages.

### Brief description of the invention

In order to meet this aim, an installation of the type as described in the first paragraph is now provided, having the features as described in Claim 1. By removing vapour bubbles and air bubbles via this (these) vent pipe(s) the abovementioned disadvantages are avoided. Each vent pipe runs upwards to a level above the highest water level in the installation and runs downwards from that point. As a result any moisture that has formed in the vent pipe as a result of condensation is not picked up in the stream of water, where it would interfere with any measurements of the water flow, but is discharged to the outside via the section running downwards. Furthermore, the section of a vent pipe running downwards discharges above the cold water reservoir. In this case the condensate will serve as feed water for topping up water in the cold water reservoir and will not reach an uncontrolled location in the installation.

In principle, there are two locations where the pump can be incorporated in the system, i.e. between the cold water reservoir and the heating unit or between the heating unit and the draw-off point.

A first preferred embodiment of the invention is, now, characterised in that the pump is installed in the cold water pipe and in that, viewed in the direction of flow of the water, a vent pipe is connected to the cold water pipe downstream of the pump and upstream of the heating unit. Bubbles that have formed in the pump or possibly were already present in the water are removed from the water through this vent pipe.

In a further development of this first embodiment, a further vent pipe is connected to the hot water pipe. The vapour bubbles and air bubbles that have formed in the heating unit are discharged via this further vent pipe.

A second embodiment of the invention is characterised in that the pump is installed in the hot water pipe and that, viewed in the direction of flow of the water, a vent pipe is connected to the hot water pipe downstream of the heating unit and upstream of the pump.

In a further development of this second embodiment, a further vent pipe is connected to the hot water pipe downstream of the pump. The vapour bubbles and air bubbles that have formed in the pump are discharged via this further vent pipe.

### Description of the figures

The invention will now be discussed in more detail with reference to the appended drawings, in which:
Figure 1 shows an installation from the state of the art,
Figure 2 shows a first diagrammatic embodiment of an installation according to the invention,
Figure 3 shows a second diagrammatic embodiment of an installation according to the invention, and
Figure 4 shows a third, more detailed embodiment of an installation according to the invention.

### Detailed description

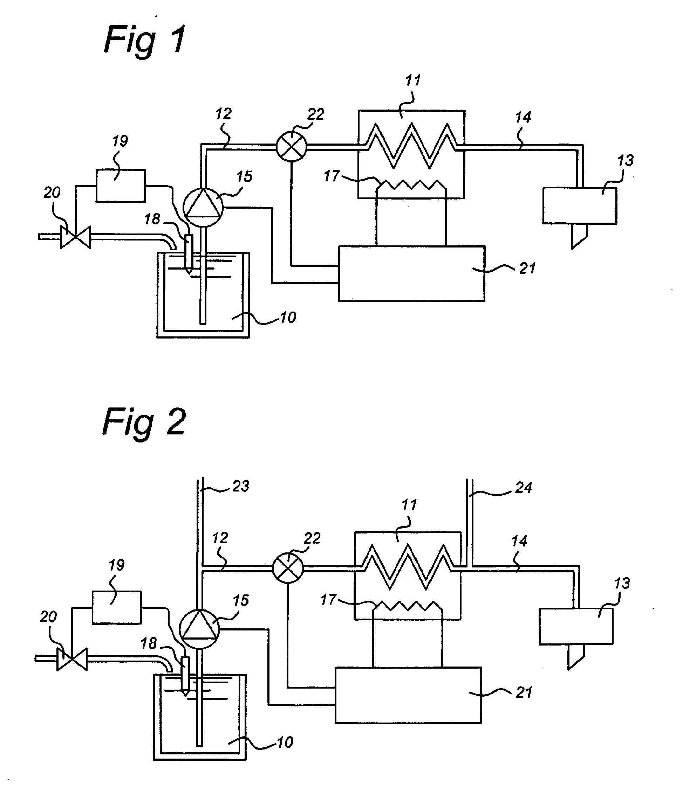

Figure 1 shows an installation from the state of the art. This installation is provided with a cold water reservoir 10, a heating unit 11, a cold water pipe 12 between the cold water reservoir 10 and the heating unit 11, a draw-off point 13 for drawing off hot water, a hot water pipe 14 between the heating unit 11 and the draw-off point 13, and a pump 15. The pump 15 provides for the flow of water from the cold water reservoir 10 through the cold water pipe 12, the heating unit 11 and the hot water pipe 14 to the draw-off point 13.

The heating unit 11 is filled with a liquid (generally water) that is kept at a predetermined temperature (just below 100 degrees C) by an electric heating element 17. This element is actuated in a known manner by a controller 21 on the basis of signals from a thermostat (not shown). This is assumed to be known to those skilled in the art.

The level of the water in the reservoir 10 can, for example, be controlled by a level sensor 18 that gives a signal to a controller 19 that controls a tap 20 to allow water to flow from a feed pipe into the reservoir as soon as the water falls below the level of the sensor. The various aspects are also considered to be clear to those skilled in the art and not to require any further explanation.

Furthermore, a flow meter 22, by means of which the quantity of water flowing through is measured, is fitted in the cold water pipe. On the basis of signals from this flow meter, the controller 21 will control the pump in such a way that after switching on the pump a predetermined quantity of hot water is supplied via the draw-off point 13, after which the pump is switched off.

As has already been indicated above, vapour bubbles and air bubbles that have an adverse effect on the operation of a pump can be formed at various locations in this installation, which bubbles have an adverse effect on the functioning of the flow meter 22 and can impede the uniform flow of the water because these bubbles can cling to the wall of the pipes.

The invention now proposes to remove these vapour bubbles and air bubbles via vent pipes. An installation adapted in accordance with the invention for this purpose is shown diagrammatically in Figure 2.

The installation in Figure 2 is provided with the same components as in Figure 1 and these are indicated by the same reference numerals. The components 10-22 thus do not need to be discussed again. In accordance with the invention a vent pipe 23 has been added that is connected downstream of the pump 15 but in any event upstream of the flow meter 22. Air bubbles that have formed in the pump 15 or possibly were already present in the pipe 12 upstream of the pump are discharged via this vent pipe into the atmosphere. The result is that a calm stream of water without bubbles is fed to the flow meter, as a result of which this flow meter is able to function well and is able to give an accurate signal. The vent pipe is, for example, connected at a high point, in particular the highest point, of the cold water pipe 12 between the pump 15 and the flow meter 22 assuming that the majority of the air and vapour bubbles will collect at this location.

Furthermore, in accordance with the invention a second vent pipe 24 is connected to the hot water pipe, for example close to the outflow connection of the heating unit 11. Air bubbles and vapour bubbles that have been generated in the heating unit are discharged via this pipe 24 into the atmosphere. As a result a calm stream of water without bubbles and without sputtering is supplied via the draw-off point to the user.

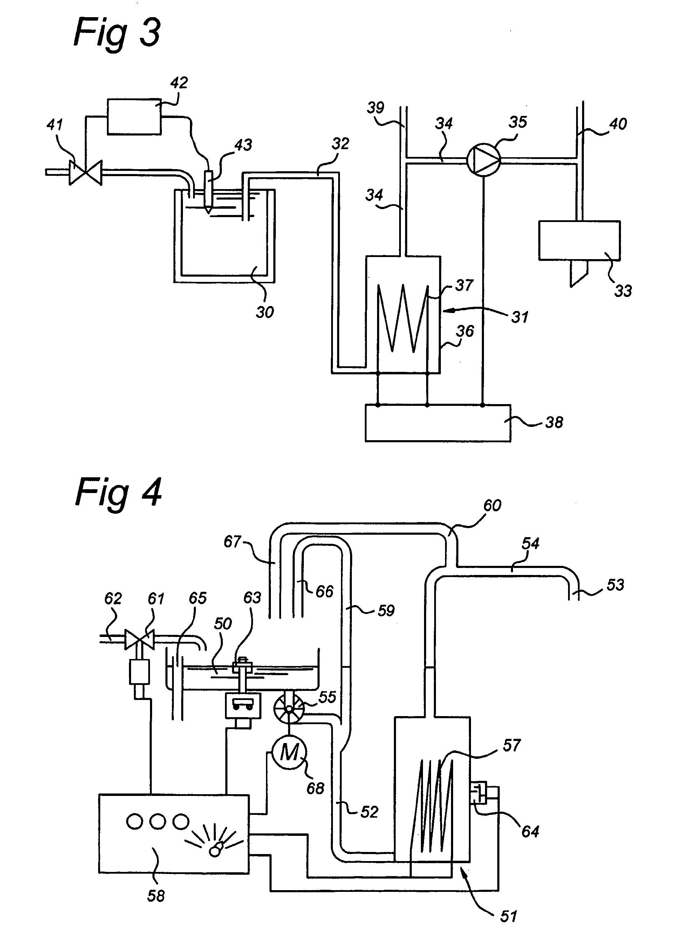

Vent pipes can also be used successfully in an embodiment where the pump is downstream of the heating unit in order to remove vapour bubbles and air bubbles from the installation. Figure 3 shows this diagrammatically.

Figure 3 shows, diagrammatically, a second embodiment of an installation according to the invention. This installation is provided with a cold water reservoir 30, a heating unit 31, a cold water pipe 32 between the cold water reservoir 30 and the heating unit 31, a draw-off point 33 for drawing off hot water, a hot water pipe 34 between the heating unit 31 and the draw-off point 33, and a pump 35. In this case the pump 35 is accommodated in the hot water pipe 34.

In this case the heating unit is of the flow-through type. The unit is provided with a boiler 36 with an inlet connection to which the cold water pipe 32 is coupled and an outlet connection to which the hot water pipe 34 is coupled. In the heating unit there is a heating element 37 that is thermostatically powered by the controller 38 and that is in direct contact with the water flowing over it.

The tap 41, the level sensor 42 and the controller 43 have the same function as the corresponding components 18, 19 and 20 described above and therefore require no further discussion.

In this embodiment vent pipes 39 and 40 are fitted to the hot water pipe 34 and specifically just downstream of the heating unit 31 and just downstream of the pump 35, respectively. Under certain circumstances the pipe 40 can optionally be omitted in those cases where air bubbles and/or vapour bubbles in the hot water pipe downstream of the pump are considered to be less important because they cannot influence the functioning of the installation any more.

In Figure 3 there is no longer a flow meter. It has been found that by virtue of the measures according to the invention such a uniform stream of water through the installation is achieved that it suffices to activate the pump 35 for a predetermined period and thus to supply a predetermined quantity of hot water via the draw-off unit 33.

Finally, Figure 4 shows an embodiment of the type with the pump in the cold water pipe and with further more practically oriented details.

The installation is provided with a cold water reservoir 50, a heating unit 51 of the flow-through type, a cold water pipe 52 between the cold water reservoir 50 and the heating unit 51, a draw-off point 53 for drawing off hot water, a hot water pipe 54 between the heating unit 51 and the draw-off point 53, and a pump 55 driven by a motor 68. In this case the pump 55 is accommodated in the cold water pipe 52. In the heating unit 51 the water flows over the heating element 57 and is heated. The temperature is controlled by a controller 58 on the basis of signals from a temperature sensor 64.

The water in the reservoir 50 is kept at the desired level by means of the tap 61 connected to a water feed pipe 62, which tap 61 is opened and closed by the controller 58 on the basis of signals from the float 63. The mode of operation of the components 61, 62 and 63 is once again assumed to be known. There is also an overflow pipe 65 in the reservoir 50, which overflow pipe 65 is intended only for emergencies.

The installation is provided with a first vent pipe 59 that is connected to the cold water pipe 52 at a location downstream of the pump 55 and preferably close to the highest point of the pipe 52. The pipe 59 runs upwards to a level that is above the highest level that the water can reach in the installation. From this level the pipe bends over and further extends downwards over a certain distance. This downward extension is indicated by 66 in the figure. What is achieved by this means is that any condensation occurring in the vent pipe, which can be expected in particular in the relatively cold section 66 running downwards, does not flow back to the pipe 52. To keep the installation clean, the downward section 66 is positioned above the reservoir 50 in which the condensed water is collected.

The installation is furthermore provided with a second vent pipe 60, the function of which will now be clear after the above. This pipe also runs up to a high level that is above the highest level that can be reached by the water in the installation and is then provided with a section 67 running downwards. This section 67 is oriented towards the reservoir 50. The pipe 60 is preferably coupled to the hot water pipe 54 at the highest point of the latter.

A separate flow meter is not used in the installation according to Figure 4 because, by virtue of the vent pipes, such a calm flow of water through the various pipes is achieved that activation of the pump for a predetermined period is sufficient to supply a predetermined quantity of hot water. A flow meter is a relatively expensive component that is susceptible to malfunction and that has thus become superfluous by virtue of the measures according to the invention.

## Claims

1. Installation for the preparation of hot water, comprising:
a cold water reservoir (50),
a heating unit (51),
a cold water pipe (52) between the cold water reservoir (50) and the heating unit (51), a draw-off point (53) for drawing off hot water,
a hot water pipe (54) between the heating unit (51) and the draw-off point, (53),
a pump (55) for making water flow from the cold water reservoir (50) through the cold water pipe (52), the heating unit (51) and the hot water pipe (54) to the draw-offpoint (53),
in which a vent pipe (59, 60) is connected to at least one of the said pipes **characterised in that** each vent pipe (59, 60) runs upwards to a level above the highest water level in the installation and runs downwards from that point, and **in that**
the section of the vent pipe running downwards (66; 67) discharges above the cold water reservoir (50).

2. Installation according to Claim 1, **characterised in that** the pump (55) is installed in the cold water pipe (52) and **in that**, viewed in the direction of flow of the water, a vent pipe (59) is connected to the cold water pipe (52) downstream of the pump (55) and upstream of the heating unit (51).

3. Installation according to Claim 2, **characterised in that** a further vent pipe (60) is connected to the hot water pipe (54).

4. Installation according to Claim 1, **characterised in that** the pump (35; 55) is installed in the hot water pipe (34; 54) and that, viewed in the direction of flow of the water, a vent pipe (39) is connected to the hot water pipe (34; 54) downstream of the heating unit (31; 51) and upstream of the pump (55).

5. Installation according to Claim 4, **characterised in that** a further vent pipe (40) is connected to the hot water pipe (34; 54) downstream of the pump(35; 55).

6. Installation according to one of the preceding claims, **characterised in that** the cold water reservoir (50) is connected via a controllable tap (61) to a cold water feed pipe (62) and **in that** the water level in the cold water reservoir (50) is measured by a level meter (63) that gives a signal to open the tap (61) when the level falls below a set level and gives a signal to close the tap (61) when the set level is exceeded.

## Patentansprüche

1. Vorrichtung zum Zubereiten von heißem Wasser, bestehend aus:
einer Kaltwassereinheit (50),
einer Heizeinheit (51),
einer Kaltwasserleitung (52) zwischen dem Kaltwasserbehälter (50) und der Heizeinheit (51),
einem Auslass (53) zum Ablassen des heißen Wassers,
einer Warmwasserleitung (54) zwischen der Heizeinheit (51) und dem Auslass (53),
einer Pumpe (55), um das Wasser von dem Kaltwasserbehälter (50) durch die Kaltwasserleitung (52), der Heizeinheit (51) und die Warmwasserleitung (54) zu dem Auslass (53) zu fördern,
bei der eine Entlüftungsleitung (59, 60) mit wenigstens einer dieser Leitungen verbunden ist,
**dadurch gekennzeichnet, dass**
jede Entlüftungsleitung (59, 60) aufwärts bis zu einer Höhe oberhalb des höchsten Wasserstandes in der Vorrichtung führt und von diesem Punkt aus abwärts führt, und dass der Teil der Entlüftungsleitung, der abwärts führt (66, 67) sich oberhalb des Kaltwasserbehälters (50) entlädt.

2. Vorrichtung nach Anspruch 1,
**dadurch gekennzeichnet, dass**
die Pumpe (55) in die Kaltwasserleitung (52) eingebaut ist und dass, in Strömungsrichtung des Wassers gesehen, eine Entlüftungsleitung (59) mit der Kaltwasserleitung (52), stromabwärts von der Pumpe (55) und stromaufwärts von dem Heizgerät (51), verbunden ist.

3. Vorrichtung nach Anspruch 2,
**dadurch gekennzeichnet, dass**
eine weitere Entlüftungsleitung (60) mit der Warmwasserleitung (54) verbunden ist.

4. Vorrichtung nach Anspruch 1,
**dadurch gekennzeichnet, dass**
die Pumpe (35; 55) in die Warmwasserleitung (34, 54) eingebaut ist und dass, in Strömungsrichtung des Wassers gesehen, eine Entlüftungsleitung (39) mit der Warmwasserleitung (34; 54), stromabwärts von dem Heizgerät (31; 51) und stromaufwärts von der Pumpe (55), verbunden ist.

5. Vorrichtung nach Anspruch 4,
**dadurch gekennzeichnet, dass**
eine weitere Entlüftungsleitung (40) mit der Warmwasserleitung (34; 54) stromabwärts der Pumpe (35; 55) verbunden ist.

6. Vorrichtung nach einem der vorhergehenden Ansprüchen,
**dadurch gekennzeichnet, dass**
der Kaltwasserbehälter (50) über einen steuerbaren Leitungsanschluss (61) mit einer Kaltwasserzuleitung (62) verbunden ist und **dadurch**, dass der Wasserstand im Kaltwasserbehälter (50) von einem Wasserstandmesser (63) gemessen wird, der ein Signal zum Öffnen des Leitungsanschlusses (61) sendet, wenn der Wasserstand unterhalb eines bestimmten Pegels fällt und ein Signal zum Schließen des Leitungsanschlusses (61) sendet, wenn der bestimmte Pegel überschritten ist.

## Revendications

1. Installation de préparation d'eau chaude, comprenant : un réservoir d'eau froide (50),
une unité de chauffage (51),
un tuyau d'eau froide (52) situé entre le réservoir d'eau froide (50) et l'unité de chauffage (51),
un point de tirage (53) destiné à tirer de l'eau chaude,
un tuyau d'eau chaude (54) situé entre l'unité de chauffage (51) et le point de tirage (53),
une pompe (55) destinée à générer un écoulement d'eau du réservoir d'eau froide (50) au point de tirage (53) en passant par le tuyau d'eau froide (52), l'unité de chauffage (51) et le tuyau d'eau chaude (54),
un tuyau d'évacuation (59, 60) étant raccordé à au moins un desdits tuyaux,
**caractérisée en ce que** chaque tuyau d'évacuation (59, 60) monte jusqu'à un niveau au-dessus du niveau d'eau le plus élevé dans l'installation puis descend, et **en ce que** la section desdits tuyaux d'évacuation descendants (66 ; 67) s'ouvre au-dessus du réservoir d'eau froide (50).

2. Installation selon la revendication 1, **caractérisée en ce que** la pompe (55) est installée dans le tuyau d'eau froide (52) et **en ce qu'**un tuyau d'évacuation (59) est raccordé au tuyau d'eau froide (52) en aval de la pompe (55) et en amont de l'unité de chauffage (51), lorsque l'on regarde dans le sens d'écoulement de l'eau.

3. Installation selon la revendication 2, **caractérisée en ce qu'**un autre tuyau d'évacuation (60) est raccordé au tuyau d'eau chaude (54).

4. Installation selon la revendication 1, **caractérisée en ce que** la pompe (35 ; 55) est installée dans le tuyau d'eau chaude (34 ; 54) et **en ce qu'**un tuyau d'évacuation (39) est raccordé au tuyau d'eau chaude (34 ; 54) en aval de l'unité de chauffage (31 ; 51) et en amont de la pompe (55), lorsque l'on regarde dans le sens d'écoulement de l'eau.

5. Installation selon la revendication 4, **caractérisée en ce qu'**un autre tuyau d'évacuation (40) est raccordé au tuyau d'eau chaude (34 ; 54) en aval de la pompe (35 ; 55).

6. Installation selon l'une des revendications précédentes, **caractérisée en ce que** le réservoir d'eau froide (50) est raccordé par le biais d'un robinet commandé (61) à un tuyau d'alimentation en eau froide (62) et **en ce que** le niveau d'eau dans le réservoir d'eau froide (50) est mesuré par un dispositif de mesure de niveau (63) qui génère un signal d'ouverture du robinet (61) lorsque le niveau tombe au-dessous d'un niveau prescrit et qui génère un signal de fermeture du robinet (61) lorsque le niveau prescrit est dépassé.
